Europäisches Patentamt

European Patent Office

Office européen des brevets

(11) Publication number: **0 039 240**
**B1**

# (12) EUROPEAN PATENT SPECIFICATION

(45) Date of publication of patent specification: **21.01.87**

(21) Application number: **81301878.5**

(22) Date of filing: **28.04.81**

(51) Int. Cl.⁴: **C 08 L 21/00** // (C08L21/00, 23:02)

(54) Process for the preparation of rubber compositions having a high modulus of elasticity.

(30) Priority: **28.04.80 JP 55450/80**
**27.05.80 JP 69570/80**
**28.07.80 JP 102430/80**
**29.07.80 JP 103198/80**

(43) Date of publication of application:
**04.11.81 Bulletin 81/44**

(45) Publication of the grant of the patent:
**21.01.87 Bulletin 87/04**

(84) Designated Contracting States:
**DE GB**

(56) References cited:
**GB-A- 822 621**
**US-A-4 005 054**

(73) Proprietor: **JAPAN SYNTHETIC RUBBER CO., LTD.**
**11-24, Tsukiji-2-chome Chuo-ku**
**Tokyo 104 (JP)**

(72) Inventor: **Ikeda, Hiroharu**
**13-6, Narusedai-4-chome**
**Machida-shi (JP)**
Inventor: **Goto, Kohei**
**Kashii-Wakaba Danchi No. 16-204**
**735, Hamao Fukuoka-shi (JP)**
Inventor: **Shimozato, Yasuyuki**
**Nihon Goseigomu Shataku No. 4-303**
**29, Aobadai-2-chome Midori-ku Yokohama (JP)**
Inventor: **Yamamoto, Kazuhiko Nihon Goseigomu**
**Shataku No. 2-302 29 Aobadai-2-chome**
**Midori-ku, Yokohama (JP)**

(74) Representative: **Tubby, David George et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

This invention relates to a process for preparing a rubber composition having a high modulus of elasticity by drawing, at a temperature within a specific range, a mixture consisting essentially of a rubber matrix containing a microdispersion of particles of a high melting point isotactic polymer of an α-ethylenically unsaturated hydrocarbon.

Conservation of material resources and of energy have become important themes in the industrial world in recent years, as a result of which attention in the rubber industry has been directed to making the weight of articles lighter and enhancing performances of articles. For this purpose, in some specific fields, there have been desired vulcanized rubbers with a higher modulus of elasticity than that of generally used vulcanized rubbers but in which the physical properties of the vulcanized rubbers (other than the modulus of elasticity) are substantially the same as those of conventional vulcanized rubbers; moreover, it is desired that the rubber composition should have excellent processability in preparing rubber articles.

A common method of increasing the modulus of elasticity of a vulcanized rubber is to mix a rubber with a material having a high modulus of elasticity (such as carbon black or a resin) in a powdery or fibrous form. However, the dispersibility of the high-modulus material in the rubber and the interfacial adhesion of the rubber and the high-modulus material are both unsatisfactory, and therefore, when stress is exerted on the vulcanized rubber, the interface of the rubber and the high-modulus material breaks down, resulting in a deterioration in the physical properties (such as tensile strength, tear resistance and flexing resistance) of the vulcanizate. For example, even polyisoprene rubber, which has the highest flexing resistance of all diene-type rubbers and is widely used for radial tires, has the problem that, when a large amount of carbon black is incorporated therein to increase the modulus of elasticity, the physical properties, particularly flexing resistance, of vulcanisates thereof decrease.

A composition in which short fibers of a highly crystalline 1,2-polybutadiene are micro-dispersed in rubber is disclosed in Japanese Patent Application Kokai (i.e. as laid open to public inspection) No. 23150/80, but this composition, although having improved fracture resistance and reinforcing effect, still has unsatisfactory heat stability due to the high unsaturation of the highly crystalline 1,2-polybutadiene.

We have now found that these defects of rubbers reinforced with conventional high-modulus materials may be eliminated when a mixture of a rubber and a high melting point isotactic polymer is processed under specific conditions by means of an appropriate processing machine such as a roll or an extruder. It is possible to produce commercially a rubber composition having an improved green strength and also showing, when vulcanized, a high modulus of elasticity and markedly improved fracture characteristics.

US—A—4005054 and GB—A—822621 also disclose methods of mixing rubbers and isotactic polymers.

According to the present invention, there is provided a process for producing a rubber composition having a high modulus of elasticity in which a mixture comprising a rubber matrix containing a micro-dispersion of particles of an isotactic polymer of an α-ethylenically unsaturated compound, said polymer having a melting point of at least 150°C and said particles having a particle size of 50 μm or less, is drawn at a temperature no more than 65°C below said melting point and no more than 20°C above said melting point, characterized in that said mixture is prepared by mixing a solution of the rubber and the isotactic polymer or making a solution of both components.

The rubber used in this invention may be, for example, a polyisoprene rubber, polybutadiene rubber, styrene-butadiene rubber, butadiene-pentadiene-styrene rubber, ethylene-propylene rubber, isoprene-isobutylene rubber, butyl rubber, natural rubber and mixtures thereof. Of these, polyisoprene rubbers, polybutadiene rubbers, natural rubbers, and styrene-butadiene rubbers are preferred, polyisoprene and natural rubbers being most preferred.

Particularly suitable polyisoprene rubbers are high-*cis*-1,4-polyisoprene rubbers with a *cis*-1,4 content of at least 90%. It is also possible to use mixtures of polyisoprene rubber and other types of rubber, for example, diene rubbers (such as polybutadiene rubber or styrene-butadiene rubber), ethylene-propylene rubber, butyl rubber or mixtures thereof. The diene rubbers are preferred because they easily covulcanize. The polyisoprene rubber content in the rubber mixture is preferably at least 50% because a content less than 50% tends to deteriorate the fracture characteristics of the product.

The isotactic polymer also used in this invention has a melting point (which may be determined as the peak temperature reached when scanning is effected at 20°C/minute using a differential scanning calorimeter) of at least 150°C, preferably at least 160°C. If the melting point of the polymer is less than 150°C, it will melt under the vulcanization conditions of rubber and no satisfactory properties are obtained.

Specific examples of such high melting point isotactic polymers which may be used in this invention include the following isotactic polymers: polypropylene; polyallylcyclopentane; polyallylcyclohexane; polyallylbenzene; poly(3 - methyl - 1 - butene); poly(3 - cyclohexyl - 1 - butene); poly(4 - phenyl - 1 - butene); poly(3 - methyl - 1 - pentene); poly(3 - methyl - 1 - pentene); poly(4 - methyl - 1 - pentene); poly(3 - methyl - 1 - hexene); poly(4 - methyl - 1 - hexene); polyvinylcyclopentane; and copolymers of two or more α-ethylenically unsaturated compounds, such as a copolymer of propylene and allylbenzene or a copolymer of 3 - methyl - 1 - butene and 1-butene. Of these, isotactic polypropylene and poly(4 - methyl - 1 - pentene) are preferred. Poly(4 - methyl - 1 - pentene) can be synthesized, for example, using a Ziegler-Natta catalyst composed of triethyl aluminum and titanium tetrachloride; its melting point is at least 200°C. Isotactic polypropylene can be obtained by polymerization with a Ziegler-Natta catalyst; it has

2

a melting point of at least 150°C and contains at least 90% of isotactic polymer. An isolated isotactic polymer is particularly preferred.

Hereafter, for simplicity, the polymer of an α-ethylenically unsaturated compound is referred to as a "poly-α-olefin" but it will be understood that this term, as used herein, includes within its scope polymers of all α-ethylenically unsaturated compounds, especially hydrocarbons, and not merely of α-olefins.

The mixture consisting essentially of a rubber matrix having micro-dispersed therein particles of a high melting point isotactic poly-α-olefin with an average particle size of not more than 50 μm can be prepared as follows:

Powder or pellets of a high melting point isotactic poly-α-olefin and rubbers, both being solutions in organic solvents, are uniformly mixed, and the polymer mixture is then recovered.

Solvents such as hydrocarbons or halogenated hydrocarbons may be used as the organic solvent. Examples of said solvents are benzene, toluene, xylene, tetrahydronaphthalene, hexane, heptane, octane, cyclohexane, methylene chloride, ethylene dichloride, ethane tribromide, chlorobenzene, bromobenzene, o-dichlorobenzene and mixtures thereof. Among these solvents, hydrocarbon compounds having a boiling point of 120°C or less such as benzene, toluene, hexane, heptane and cyclohexane are particularly preferred in respect of solvent recovery.

A solution of powder or pellets of a high-melting isotactic poly-α-olefin in an organic solvent and a solution of rubber in an organic solvent are uniformly mixed with each other and a polymer mixture is recovered from the resulting solution mixture. In this case, the form of the high-melting isotactic poly-α-olefin is not necessarily a fine powder having an average particle size of not more than 50 μ, and the powder or pellets as obtained in the production of the isotactic poly-α-olefin may be used as it is. The solvent in which the high-melting isotactic poly-α-olefin is dissolved to form a solution includes the solvents mentioned above. The concentration of the poly-α-olefin solution is 0.5 to 40% by weight, preferably 1 to 20% by weight. The rubber solution may be obtained by dissolving the rubber in the organic solvent or by polymerizing the monomer in the organic solvent. The rubber solution may contain a terminator or an anti-aging agent or may be diluted with a solvent. The concentration of the rubber solution is 0.5 to 40% by weight, preferably 1 to 20% by weight. The method of mixing the two includes a method by which an isotactic poly-α-olefin is added to a rubber solution, or rubber is added to an isotactic poly-α-olefin solution, or the two are added at the same time to an organic solvent, and the resulting solution is stirred or a method by which an isotactic poly-α-olefin solution is blended with a rubber solution. In the case of the last method, the isotactic poly-α-olefin may be added to the rubber solution, or the rubber solution may be added to the isotactic poly-α-olefin solution, or alternatively, the two solutions may be added to a vessel simultaneously. In this case, the two solvents are not always the same, but it is advantageous that the solvents are the same. In order to keep the poly-α-olefin well dispersed in the rubber, it is necessary to coagulate the rubber while keeping the resulting solution uniform to recover the polymer mixture. That is to say, even if the poly-α-olefin is dissolved in an organic solvent by heating, it is not desirable to precipitate the polymer by cooling.

The mixture consisting essentially of a rubber matrix having micro-dispersed therein particles of a high-melting isotactic poly-α-olefin having a melting point of at least 150°C, said particles having an average particle size of not more than 50 μ, as produced by any of the above-mentioned various methods, is subjected to drawing at a temperature between the temperature 65°C lower, preferably 55°C lower, than said melting point and the temperature which is 20°C higher than said melting point, and the temperature of the drawn mixture is returned to an ordinary rubber processing temperature, followed by mixing with necessary additives such as inorganic filler, softener, plasticizer, coloring matter, anti-aging agent, curing agent, accelerator, and the like, and then vulcanizing and molding. Alternatively, additives such as inorganic filler, softener, plasticizer, coloring matter, anti-aging agent, and the like may be first mixed with the mixture of rubber and a high-melting isotactic poly-α-olefin and the resulting mixture may then be drawn at a temperature in the above-defined range, followed by further addition of a vulcanizing agent and an accelerator, and then vulcanizing and molding. This alternative process gives the same results as the first-mentioned process. The term "drawing" used herein means a treatment by which the rubber composition is subjected to a mechanical shearing force above the temperature at which isotactic poly-α-olefin begins to soften by a suitable means such as roll, calender, extruder with die or the like, to orientate the isotactic poly-α-olefin in the composition. The greater the degree of said orientation, the higher the modulus of elasticity of the product becomes. It is, therefore, desirable to process the composition under such conditions that a high shearing force, that is, a large processing strain, is given, and usually, it is commercially advantageous to employ a roll, calender, extruder with a die or the like. If the drawing temperature is more than 65°C lower than the melting point of the isotactic poly-α-olefin used, it is unable to properly orientate the particles because the isotactic poly-α-olefin is not softened even if the drawing is performed under the conditions giving a large processing strain, so that there cannot be obtained a rubber composition with a high modulus of elasticity. On the other hand, if drawing is performed at a temperature more than 20°C higher than the melting point of the isotactic poly-α-olefin, the orientated isotactic poly-α-olefin is annealed to make it impossible to produce the intended effect of orientation, and hence, it is impossible to obtain a molded article with a high modulus of elasticity. Thus, drawing is preferably performed at a temperature between 110° and 180°C in the case of polypropylene.

Specifically, the polyisoprene rubber containing the polypropylene having an averaged particle size of 50 μ

3

or less obtained any method is passed through 3-inch rolls having a slit of 0.1 mm at 20 r.p.m. at a rubber temperature of 160°C. When an extruder is used to draw the particles, the polyisoprene containing polypropylene having an average particle size of 50 μ or less is extruded through an extruder with the dies having a slit of 0.1 mm and a width of 50 mm at a rubber temperature of 160°C.

The mixing ratio of a high-melting isotactic poly-α-olefin in the rubber composition is not critical, but in order to obtain a vulcanized rubber having a high modulus of elasticity (indicated in 100% tensile stress) as well as excellent tear and flexing resistance, the isotactic poly-α-olefin content in the rubber composition is preferably within the range of 2 to 40% by weight, more preferably 3 to 25% by weight. If the poly-α-olefin content is less than 2% by weight, the product tends to be inferior in modulus of elasticity, and if said poly-α-olefin content exceeds 40% by weight, the processability of the composition tends to be poor.

The rubber composition obtained according to the process of this invention may be applied to practical uses either alone or in admixture with other rubbers. Said other rubbers include polyisoprene rubber, polybutadiene rubber, styrene-butadiene rubber, ethylene-propylene rubber, butyl rubber, natural rubber, etc., and diene rubbers are most preferred for use in combination with the rubber composition of this invention.

The rubber composition produced according to the process of this invention has a high green strength in the unvulcanized state and, when vulcanized, shows a high modulus of elasticity and excellent fracture characteristics such as high flex-crack resistance, so that it finds a wide scope of applications of rubber.

This invention is described in further detail below referred to Examples, which are merely by way of illustration and not by way of limitation.

Example

In 2 kg of toluene were dissolved by heating 90 g of IR2200 [polyisoprene rubber produced by Japan Synthetic Rubber Co. Ltd.; cis-1,4 content 98%; $ML_{1+4}^{100°C}=82$] and 10 g of pellets of polypropylene having an average particle size of 3 mm and the resulting hot polymer solution was then poured into a large amount of methanol containing a small amount of 2,6 - di - t - butyl - p - cresole to recover the polymer. The polymer thus obtained was dried in vacuo for 24 hrs.

The average particle size of the polypropylene in the rubber composition obtained was 0.48 μ. This rubber composition was drawn by means of a roll at 150°C, and compounded with the compounding agents according to the recipe in Table 1, and then vulcanized. The physical properties of the vulcanizate are shown in Table 2.

TABLE 1

| | |
|---|---|
| Polymer | 100 parts by weight |
| Carbon black (ISAF) | 50 parts by weight |
| Aromatic oil (JSR AROMA)* | 10 parts by weight |
| Zinc oxide | 5 parts by weight |
| Stearic acid | 1 part by weight |
| Anti-aging agent (810-NA)** | 1 part by weight |
| Vulcanization accelerator CZ*** | 1.5 parts by weight |
| Sulfur | 2.5 parts by weight |
| Vulcanization conditions: | 145°C, 25 min. |

Note:
    *High aromatic extender oil
    **N-phenyl-N'-isopropyl-p-phenylenediamine
    ***N-cyclohexyl-2-benzothiazylsulfenamide

Comparative Example 1

A mixture consisting of 10% by weight of polypropylene powder having an average particle size of 210 μ and 90% by weight of IR2200 was compounded with the additives according to the recipe of Table 1 at a roll temperature of 160°C and then drawn at the same temperature, followed by vulcanization and molding. The results of measurement of the properties of the obtained product are shown in Table 2.

TABLE 2

| | Base rubber | Propylene (wt.%) | Average particle size[1] ($\mu$) | Mixing method[2] | Drawing temperature (°C) | 100% Tensile stress (kg/cm²) | 300% Tensile stress (kg/cm²) | Tensile strength (kg/cm²) | Elongation (%) | Flexing resistance[3] |
|---|---|---|---|---|---|---|---|---|---|---|
| Example | IR2200 | 10 | 0.48 | Wet process | 150 | 95 | 215 | 260 | 540 | 139 |
| Comp. Example 1 | IR2200 | 10 | 210 | Dry process | 160 | 40 | 120 | 155 | 330 | 110 |

Note:
[1] The average particle size was measured microscopically and indicated by the mean value from 10 samples.

[2] Mixing of polyisoprene rubber or rubber composed principally of polyisoprene rubber and a high-melting isotactic poly-α-olefin.

[3] Evaluation value of flexing resistance was determined in the following way: crack length in Comparative Example 2 (10,000 runs)/crack length in each specimen (10,000 runs)×100.

**0 039 240**

Comparative Example 2

A 90/10 (wt.%) IR2200/carbon (ISAF) mixture was drawn at a roll temperature of 160°C and cooled to 80°C, and by using it as the polymer in Table 1, compounding and vulcanization were performed according to the recipe shown in Table 1.

**Claims**

1. A process for preparing a rubber composition in which a mixture comprising a rubber matrix containing a micro-dispersion of particles of an isotactic polymer of an α-ethylenically unsaturated compound, said polymer having a melting point of at least 150°C and said particles having an average particle size of not more than 50 μm, is drawn at a temperature no more than 65°C below said melting point and no more than 20°C above said melting point, characterized in that said mixture is prepared by mixing a solution of the rubber and the isotactic polymer or making a solution of both components.

2. A process according to Claim 1, wherein said isotactic polymer is an isotactic polypropylene, polyallylcyclopentane, polyallylcyclohexane, polyallylbenzene, poly(3 - methyl - 1 - butene), poly(3 - cyclohexyl - 1 - butene), poly(4 - phenyl - 1 - butene), poly(3 - methyl - 1 - pentene), poly(4 - methyl - 1 - pentene), poly(3 - methyl - 1 - hexene), poly(4 - methyl - 1 - hexene), polyvinylcyclopentane, copolymer of propylene and allylbenzene or copolymer of 3 - methyl - 1 - butene and 1-butene.

3. A process according to Claim 1, wherein said isotactic polymer is isotactic polypropylene or poly(4 - methyl - 1 - pentene).

4. A process according to Claim 1, 2 or 3, wherein the rubber is one or more of polyisoprene rubber, polybutadiene rubber, styrene-butadiene rubber, butadiene-pentadiene-styrene rubber, ethylene-propylene rubber, isobutylene-isoprene rubber, and natural rubber.

5. A process according to Claim 1, 2 or 3, wherein the rubber is polyisoprene rubber or a mixture thereof with another rubber.

6. A process according to Claim 5, wherein the polyisoprene is a high-*cis*-1,4-polyisoprene rubber with a *cis*-1,4 content of at least 90% or a natural rubber.

7. A process according to any one of Claims 1 to 6, wherein the starting mixture is prepared by mixing powder or pellets of the isotactic polymer and rubber, both in the form of solutions in organic solvents, and then recovering a polymer mixture from the resulting solution.

8. A process according to any one of Claims 1 to 7, wherein the drawing is performed by subjecting the mixture to a mechanical shearing force.

9. A process according to Claim 8, wherein the isotactic polymer is isotactic polypropylene and the drawing is performed at a temperature between 110°C and 180°C.

10. A process according to any one of Claims 1 to 9, wherein the isotactic polymer content in the rubber composition is from 2 to 40% by weight.

11. A process according to any one of Claims 1 to 9, wherein the isotactic polymer content in the rubber composition is from 3 to 25% by weight.

**Patentansprüche**

1. Verfahren zur Herstellung einer Kautschukzusammensetzung durch Ziehen eines Gemisches einer eine Mikrodispersion von Teilchen eines isotaktischen Polymers einer α-ethylenischungesättigten Verbindung enthaltenden Kautshukmatrix, wobei das Polymer einen Schmelzpunkt von mindestens 150°C hat und die Teilchen eine mittlere Teilchengröße von höchstens 50 μm aufweisen, bei einer Temperatur von höchstens 65°C unter und höchstens 20°C über diesem Schmelzpunkt, dadurch gekennzeichnet, daß zur Herstellung des Gemisches eine Lösung des Kautshuks und das isotaktische Polymer vermischt oder eine Lösung beider Komponenten hergestellt wird.

2. Verfahren nach Anspruch 1, gekennzeichnet durch die Verwendung von isotaktischem Polypropylen, Polyallylcyclopentan, Polyallylcyclohexan, Polyallylbenzol, Poly(3 - methyl - 1 - buten), Poly(3 - cyclohexyl - 1 - buten), Poly(4 - phenyl - 1 - buten), Poly(3 - methyl - 1 - penten), Poly(4 - methyl - 1 - penten), Poly(3 - methyl - 1 - hexen), Poly(4 - methyl - 1 - hexen), Polyvinylcyclopentan, einem Copolymer von Propylen und Allylbenzol oder Copolymer von 3-Methyl-1-buten und 1-Buten als isotaktisches Polymer.

3. Verfahren nach Anspruch 1, gekennzeichnet durch Verwendung von isotaktischem Polypropylen oder Poly(4-methyl-1-penten) als isotaktisches Polymer.

4. Verfahren nach Anspruch 1, 2 oder 3, gekennzeichnet durch Verwendung mindestens eines Polyisopren-, Polybutadien-, Styrol-Butadien-, Butadien-Pentadien-Styrol, Ethylen-Propylen-, Isobutylen-Isopren-Kautschuk oder Naturkautschuk als Kautschuk.

5. Verfahren nach Anspruch 1, 2 oder 3, gekennzeichnet durch Verwendung von Polyisopren-Kautschuk oder eines Gemisches davon mit einem anderen Kautschuk als Kautschuk.

6. Verfahren nach Anspruch 5, gekennzeichnet durch Verwendung eines cis-1,4-Polyisopren-Kautschuks mit einem hohen cis-1,4-Gehalt von mindestens 90% oder eines Naturkautschuks als Polyisopren.

7. Verfahren nach einem der Ansprüche 1 bis 6, dadurch gekennzeichnet, daß das Ausgangsgemisch durch Vermischen eines Pulvers oder von Kügelchen des isotaktischen Polymers und des Kautschuks, beide in Form von Lösungen in organischen Lösungsmitteln, und Gewinnen des Polymergemisches aus dieser Lösung hergestellt wird.

8. Verfahren nach einem der Ansprüche 1 bis 7, dadurch gekennzeichnet, daß das Gemisch beim Ziehen einer mechanischen Scherkraft ausgesetzt wird.

9. Verfahren nach Anspruch 8, dadurch gekennzeichnet, daß als isotaktisches Polymer isotaktisches Polypropylen verwendet wird und das Ziehen bei einer Temperatur von 110° bis 180°C durchgeführt wird.

10. Verfahren nach einem der Ansprüche 1 bis 9, gekennzeichnet durch Herstellung einer Kautschukzusammensetzung mit einem Gehalt an isotaktischem Polymer von 2 bis 40 Gew.%.

11. Verfahren nach einem der Ansprüche 1 bis 9, gekennzeichnet durch Herstellung einer Kautschukzusammensetzung mit einem Gehalt an isotaktischem Polymer von 3 bis 25 Gew.%.

## Revendications

1. Procédé pour préparer une composition de caoutchouc dans laquelle un mélange, comprenant une matrice de caoutchouc contenant une micro-dispersion de particules d'un polymère isotactique d'un composé insaturé (α-éthylénique), ledit polymère ayant un point de fusion d'au moins 150°C et lesdites particules ayant une grosseur moyenne de particule non supérieure à 50 μm, est étiré à une température pas plus inférieure de 65°C audit point de fusion et pas plus supérieure de 20°C audit point de fusion, caractérisé en ce que ledit mélange est préparé en mélangeant une solution de caoutchouc et le polymère isotactique ou en faisant une solution des deux composés.

2. Procédé selon la revendication 1, dans lequel ledit polymère isotactique est un polypropylène, polyallylcyclopentane, polyallylcyclohéxane, polyallylbenzène, poly(3 - méthyl - 1 - butène), poly(3 - cyclohexyl - 1 - butène), poly(4 - phényl - 1 - butène), poly(3 - méthyl - 1 - pentène), poly(4 - méthyl - 1 - pentène), poly(3 - méthyl - 1 - hexène), poly(4 - méthyl - 1 - hexène), polyvinylcyclopentane, copolymère de propylène et d'allylbenzène, ou copolymère de 3 - méthyl - 1 - butène et de 1-butène, isotactiques.

3. Procédé selon la revendication 1, dans lequel ledit polymère isotactique est du polypropylène ou du poly(4 - méthyl - 1 - pentène), isotactique.

4. Procédé selon la revendication 1, 2 ou 3, dans lequel le caoutchouc est un caoutchouc polyisoprène, caoutchouc polybutadiène, caoutchouc styrène-butadiène, caoutchouc butadiène-pentadiène-styrène, caoutchouc éthylène-propylène, caoutchouc isobutylène-isoprène et caoutchouc naturel, ou plusieurs de ceux-ci.

5. Procédé selon la revendication 1, 2, ou 3, dans lequel le caoutchouc est un caoutchouc polyisoprène ou un mélange de celui-ci avec un autre caoutchouc.

6. Procédé selon la revendication 5, dans lequel le polyisoprène est un caoutchouc polyisoprène-1,4 fortement *cis* avec une teneur 1,4-*cis* d'au moins 90% ou un caoutchouc naturel.

7. Procédé selon l'une quelconque des revendications 1 à 6, dans lequel le mélange de départ est préparé en mélangeant de la poudre ou de grosses particules du polymère isotactique et du caoutchouc, les deux sous la forme de solutions dans des solvants organiques, et ensuite en récupérant un mélange de polymères à partir de la solution résultante.

8. Procédé selon l'une quelconque des revendications 1 à 7, dans lequel l'étirage est réalisé en soumettant le mélange à un effort tranchant mécanique.

9. Procédé selon la revendication 8 dans lequel le polymère isotactique et du polypropylène isotactique et l'étirage est réalisé à une température comprise entre 110°C et 180°C.

10. Procédé selon l'une quelconque des revendications 1 à 9, dans lequel la teneur en polymère isotactique dans la composition de caoutchouc est comprise entre 2 et 40% en poids.

11. Procédé selon l'une quelconque des revendications 1 à 9, dans lequel la teneur en polymère isotactique dans la composition de caoutchouc est comprise entre 3 et 25% en poids.